# EUROPÄISCHE PATENTANMELDUNG

(11) **EP 2 159 764 A1**
(43) Veröffentlichungstag der Anmeldung: **03.03.2010**
(21) Anmeldenummer: 09010795.4
(22) Anmeldetag: 24.08.2009
(51) Int. Cl.: G07G 1/00

(54) **Audio-visuelles Kommunikationssystem zum Einsatz in grossflächigen kommerziellen Anlagen**

(30) Priorität: 29.08.2008 DE 202008011572 U
(71) Anmelder: Boos, Herbert, 50354 Hürth (DE); Meyer, Florian, 50999 Sürth (DE)
(72) Erfinder: Boos, Herbert, 50354 Hürth (DE); Meyer, Florian, 50999 Sürth (DE)
(74) Vertreter: Gallo, Wolfgang

(57) **Zusammenfassung**

Audio-visuelles Kommunikationssystem zum Einsatz in großflächigen kommerziellen Anlagen, das aufweist: eine Anzahl von über die Anlage verteilt angeordneten Informationsausgabeeinrichtungen, die jeweils zur Ausgabe von Audio- und/oder visuellen Informationen ausgebildet sind, einer Datenverarbeitungsanlage, mit welcher jede der Informationsausgabeeinrichtungen verbunden oder verbindbar ist, und Kundenidentifizierungsgeräte, die während des Aufenthalts in der Anlage von Kunden mitführbar sind und den jeweiligen Kunden dadurch während seines Aufenthalts mit einer zeitweiligen Identifizierung versehen, wobei eine in dem jeweiligen Identifizierungsgerät enthaltende Identifizierungsinformation drahtlos auslesbar ist und mindestens bei einem Teil der Anzahl der Informationsausgabeeinrichtungen jeweils ein Lesegerät zum Auslesen der Identifizierungsinformation bei Annäherung eines Identifizierungsgeräts an die betreffende Informationsausgabeeinrichtung vorhanden ist, wobei jede Informationsausgabeeinrichtung ein Informationsausgabegerät, einen Prozessor, einen RAM-Speicher und ein Koppelglied aufweist, und die Informationsausgabeeinrichtungen über ein Ethernetkabel-Netzwerk mit der Datenverarbeitungsanlage verbunden sind.

## Beschreibung

Die Erfindung betrifft ein audio-visuelles Kommunikationssystem für den Einsatz in ausgedehnten kommerziellen Anlagen, wie beispielsweise großflächige Supermärkte, Multi-Shop-Einkaufszentren, Messe- und Ausstellungsareale, Flughafenanlagen oder ähnliches, insbesondere mit Ausdehnungen von mehreren hundert Metern und darüber. Ein solches audio-visuelles Kommunikationssystem soll an verschiedenen Orten der Anlage jeweils individuell auslösbare Informationen, Werbebotschaften, Unterhaltungselemente oder dergleichen erzeugen.

Aus der DE 103 14 349 A1 ist bereits ein Kommunikationssystem für Warenhäuser mit großer Verkaufsfläche bekannt, das eine Vielzahl von im Warenhaus verteilt angeordneten Informationsausgabeeinrichtungen aufweist, insbesondere in Form von visuellen Anzeigetafeln, die individuell über einen Zentralrechner angesteuert werden. Die Einkaufswagen sind jeweils mit einem Transponder ausgestattet, der eine Kennung erzeugt, die einen diesen Einkaufswagen benutzenden Kunden vorübergehend identifiziert. Dieser Kunde kann am Eingangsbereich über einen Touch-Screen beispielsweise eine ihn interessierende Warengruppe auswählen, und er wird dann automatisch über das Kommunikationssystem zum richtigen Regal oder Bereich geleitet, in dem ein jeder Informationswiedergabeeinrichtung zugeordneter Sender/Empfänger die Kennung des Transponders eines in seinen Bereich kommenden Einkaufswagens abfragt und dann die jeweilige Informationsausgabeeinrichtung die entsprechende Information ausgibt.

Bei diesem bekannten Kommunikationssystem sind die einzelnen Informationsabgabeeinrichtungen über Funkverbindungen mit dem Zentralrechner verbunden und daher jeweils mit einer entsprechenden Sende-/Empfangseinrichtung ausgestattet.

Es versteht sich, dass die mögliche Ausdehnung solcher Kommunikationsnetzwerke durch die Reichweite solcher Funkverbindungen je nach den örtlichen Gegebenheiten mehr oder weniger beschränkt ist. Aber auch wenn man Verkabelungen vorsehen würde, wären solche Beschränkungen gegeben. Aufgabe der Erfindung ist es, von diesem Prinzip ausgehend, ein verbessertes und vor allen Dingen leistungsfähigeres audio-visuelles Kommunikationssystem zu schaffen, das nicht nur zur Übermittlung einfacher Informationen wie Wegweisungspfeile oder dergleichen in der Lage ist, sondern umfassende audio-visuelle Botschaften individuell über jedes einzelne einer Vielzahl von über der Anlage verteilten Informationswiedergabeeinrichtungen abzugeben vermag. Dabei sollen hinsichtlich der maximalen Ausdehnung des Areals, in dem das System eingesetzt wird, praktisch keine Beschränkungen bestehen, und das System soll auf einfachste Weise ausbaufähig sein. Gleichzeitig soll das Kommunikationssystem aber auch wartungsarm und hinsichtlich möglicher Fehlerquellen im Betrieb auf ein Minimum reduziert sein.

Diese Aufgabe wird gemäß der Erfindung durch das im Anspruch 1 angegebene Kommunikationssystem gelöst. Vorteilhafte Ausgestaltungen und Weiterbildungen der Erfindung sind Gegenstand der Unteransprüche.

Das besondere Konzept des erfindungsgemäßen audio-visuellen Kommunikationssystems besteht aus einer Anzahl von Bildschirmeinheiten, die über ein Ethernet-Netzwerk datentechnisch untereinander sowie mit einem Server verbunden sind. Die Bildschirmeinheiten weisen jeweils einen beispielsweise auf LCD-Technik basierenden Flachbildschirm auf und werden über einen lokalen Stromanschluß mit Strom versorgt. Jede Bildschirmeinheit weist, vorzugsweise in das Gehäuse des Flachbildschirms integriert, einen Prozessor, einen RAM-Speicher, und ein Ethernet-Koppelglied auf. Jede Bildschirmeinheit weist außerdem mindestens einen internen oder externen Lautsprecher mit zugehörigem Verstärker auf.

Die Verbindung zwischen den einzelnen Bildschirmeinheiten innerhalb des Ethernet-Netzwerks erfolgt über Kupferkabel, die den Vorteil haben, dass sie im Vergleich zu anderen Netzwerktechnologien wie beispielsweise Glasfaserkabel-Netzwerke wesentlich günstiger sind. Der Nachteil von Kupferkabeln besteht darin, dass ihre Reichweite auf etwa 100 Meter zwischen zwei Geräten begrenzt ist. Bei dem erfindungsgemäßen Kommunikationssystem stellt das aber kein Problem dar, da die Vernetzung von Bildschirmeinheit zu Bildschirmeinheit erfolgt, wo die Leitungslängen in der Regel wesentlich kleiner als 100 Meter sind, und keine direkte Verbindung jeder Bildschirmeinheit zum Server erforderlich ist. Das Netzwerk des erfindungsgemäßen Kommunikationssystems kann jederzeit beliebig erweitert werden, indem zusätzliche Bildschirmeinheiten an gewünschten Orten hinzugefügt werden, die einfach an das Koppelglied der nächstliegenden benachbarten Bildschirmeinheit angeschlossen wird.

Das Kommunikationssystem nach der Erfindung wird nachstehend anhand eines Ausführungsbeispiels unter Bezugnahme auf die anliegenden Zeichnungen mehr im einzelnen beschrieben. In den Zeichnungen zeigt:
- Fig. 1: schematisch einen seinerseits verzweigten Zweig eines durch ein Ethernet-Netzwerk mit Kupferkabeln verbundenes Kommunikationssystem nach der Erfindung,
- Fig. 2: in schematischer Darstellung ein beispielsweise einen Supermarkt darstellendes Areal mit einem Kommunikationssystem nach der Erfindung, und
- Fig. 3: schematisch eine einzelne Bildschirmeinheit des erfindungsgemäßen Kommunikationssystems.

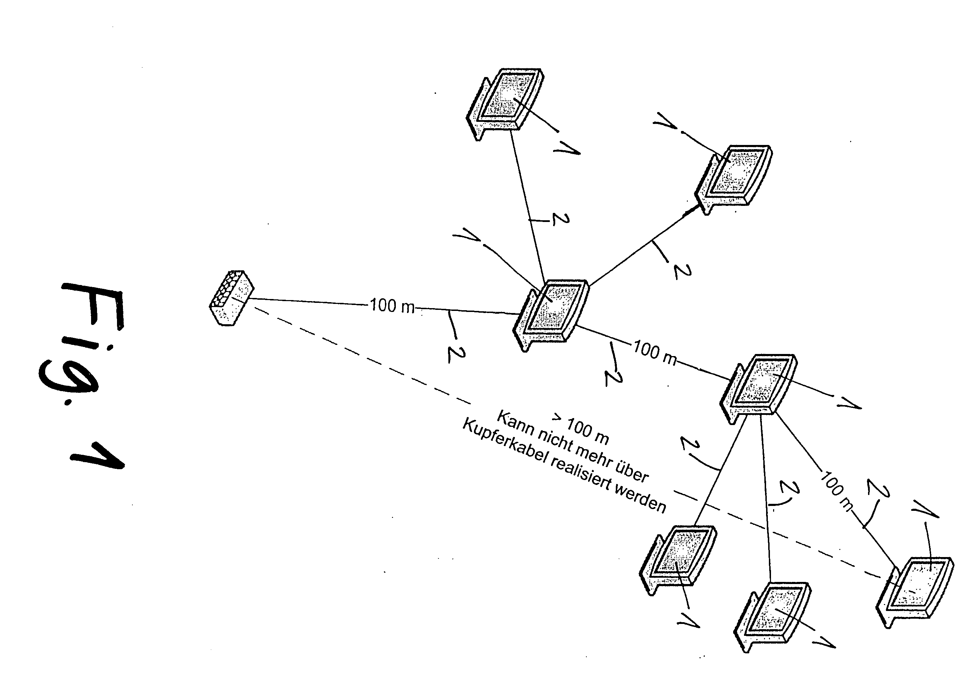

Fig. 1 zeigt schematisch den grundsätzlichen Aufbau des erfindungsgemäßen Kommunikationssystems, wobei die Anordnung in Fig. 1 sowohl als (kleines) komplettes Kommunikationssystem als auch als einzelner Zweig eines umfassenderen Kommunikationssystems angesehen werden kann.

Das Kommunikationssystem weist eine Anzahl von Bildschirmeinheiten 1 auf, die an den gewünschten Einsatzstellen innerhalb einer Anlage der eingangs erwähnten Art aufgestellt sind, um jeweils mit einem Kunden in Kommunikation zu treten, wenn dieser im Bereich der betreffenden Bildschirmeinheit 1 erscheint.

Die einzelnen Bildschirmeinheiten 1 sind durch Ethernet-Kabel (Kupferkabel) 2 miteinander vernetzt, wobei die Distanz zwischen einzelnen miteinander verbundenen Bildschirmeinheiten 1 nicht mehr als jeweils 100 Meter beträgt, entsprechend der für eine zuverlässig einwandfreie Übertragung geeigneten maximalen Kupferkabel-Leitungslänge.

Jeder Ethernetkabel 2 verbindet eine Bildschirmeinheit mit einer anderen Bildschirmeinheit, wobei, wie man sieht, an eine Bildschirmeinheit mehrere andere Bildschirmeinheiten jeweils über ein Ethernetkabel 2 angeschlossen sein können, das Netzwerk also mehrfache Verzweigungen haben kann.

Eine Bildschirmeinheit 1 ist über ein Ethernetkabel 2 mit einem Block 3 verbunden, in welchem ein Koppelglied schematisch dargestellt ist. Dieser Block 3 kann durch ein einen Netzwerkknoten darstellendes Koppelglied gebildet sein, an dem sich einfach eine Netzwerkleitung verzweigt, oder er kann durch einen Server gebildet sein, der das Netzwerk speist und dadurch die einzelnen Bildschirmeinheiten 1 steuert.

Wie in Fig. 1 auch durch die gestrichelte Linie eingezeichnet ist, beträgt die Entfernung zwischen dem Block 3 und der davon am weitesten entfernt gezeichneten Bildschirmeinheit 1 wesentlich mehr als 100 Meter, so dass eine direkte Verbindung über Kupferkabel nicht realisiert werden kann. Bei dem erfindungsgemäßen Kommunikationssystem ist das kein Problem, weil es da, wie im Folgenden noch ausführlicher erläutert wird, nur darauf ankommt, dass die Entfernungen von einer Bildschirmeinheit zur anderen innerhalb des Netzwerks nicht mehr als 100 Meter beträgt.

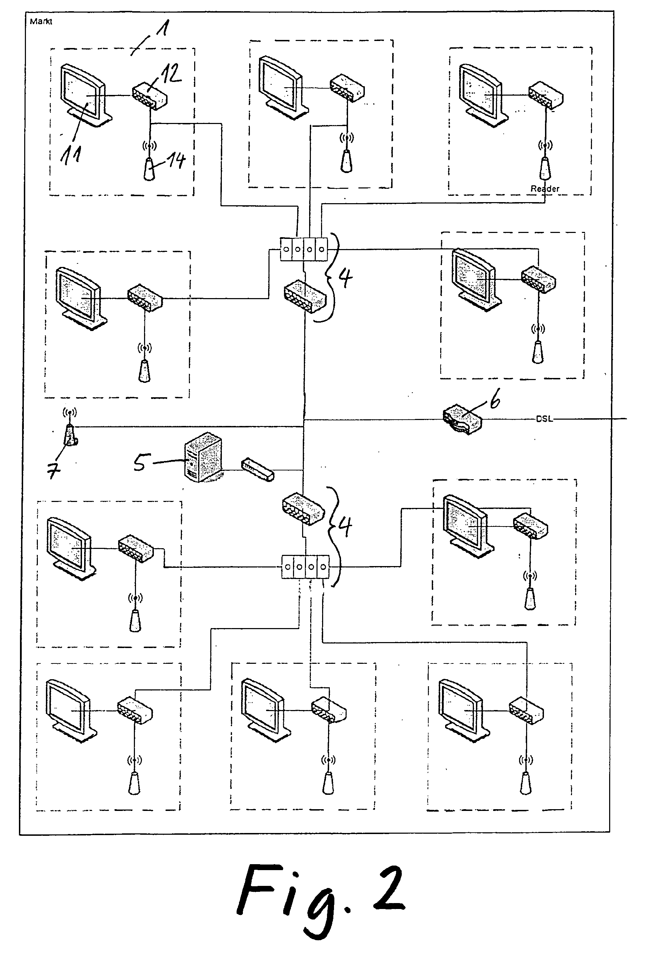

Fig. 2 zeigt nach Art eines schematischen Grundrisses eine beispielsweise einen Markt darstellende Anlage mit einer Mehrzahl von darin verteilt angeordneten Bildschirmeinheiten 1 (wobei jeweils der gestrichelt umrahmte Block die Bildschirmeinheit darstellt). Die Bildschirmeinheiten 1 sind, wie anhand von Fig. 1 grundsätzlich erläutert, über ein Ethernet-Netzwerk miteinander verbunden.

Bei dem in Fig. 2 schematisch gezeigten Beispiel umfasst das Kommunikationssystem zwei Netzwerkzweige, wobei jeder Netzwerkzweig ein einen Netzwerkknoten darstellendes Koppelglied 4 aufweist, an welchem eine Anzahl (beim gezeigten Beispiel 5) Bildschirmeinheiten 1 angeschlossen sind, und zwar jeweils über ein eigenes Ethernetkabel 2.

Die beiden die Netzwerkknoten darstellenden Koppelglieder 4 sind über Ethernetkabel untereinander und mit einem Server 5 verbunden. An den Server kann, wie dargestellt, auch ein Router 6 zum Anschluß an eine DSL-Leitung, also an das Internet, vorgesehen sein.

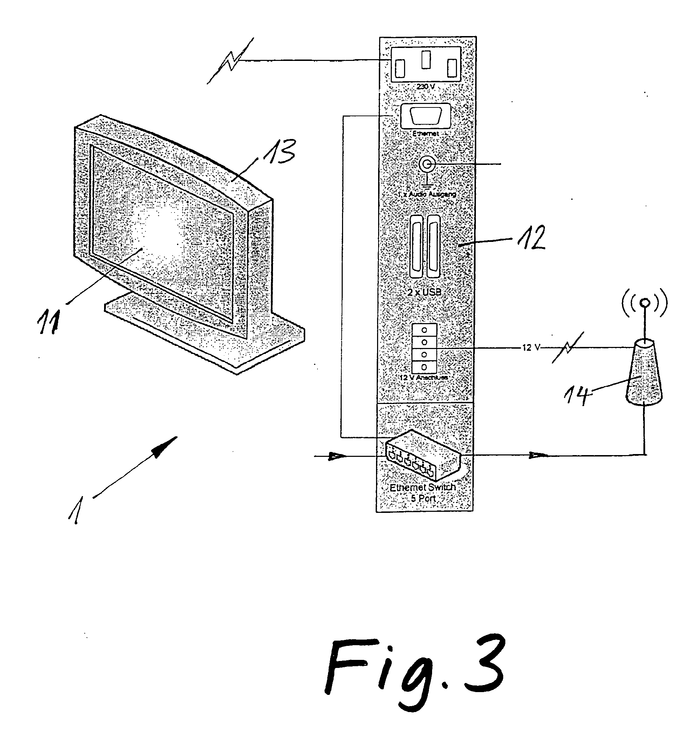

Fig. 3 zeigt schematisch den Aufbau jeder einzelnen Bildschirmeinheit 1.

Danach umfasst jede Bildschirmeinheit 1 einen Flachbildschirm 11, der vorzugsweise auf LCD-Technik basiert, weiter einen Prozessor (nicht dargestellt), einen RAM-Speicher (nicht dargestellt), und ein Koppelglied 12. Der Prozessor, der RAM-Speicher, und das Koppelglied 12 sind vorzugsweise alle im Gehäuse 13 der Bildschirmeinheit 1 untergebracht.

Das Koppelglied 12 weist beispielsweise 5 Anschlüsse auf, über welche Ethemetverbindungen zu anderen Bildschirmeinheiten oder Netzwerkknoten oder zu einem Server herstellbar sind. Ansonsten weist das Gehäuse der Bildschirmeinheit 1, wie aus Fig. 3 schematisch hervorgeht, einen Stromanschluß, ggf. einige USB-Anschlüsse, einen AudioAusgang, mindestens einen 12V-Anschluß und dergleichen auf.

Jede Bildschirmeinheit 1 weist außerdem (nicht dargestellt) mindestens einen internen oder externen Lautsprecher auf.

Jeder Bildschirmeinheit ist eine als Lesegerät dienende Antenne 13 zugeordnet, um die Kennung eines in den Bereich der Bildschirmeinheit kommenden Einkaufswagens oder dergleichen aus dem daran angeordneten Transponder auszulesen und das Abgeben der vorgesehenen Werbebotschaft, Mitteilung, Information oder dergleichen auszulösen.

Eine ähnliche als Lesegerät dienende Antenne 7 ist an einem oder jedem Eingangsbereich der Anlage angeordnet, um einen neu ankommenden und die Anlage betretenden Kunden durch Einlesen der Kennung seines Einkaufswagens aus dem daran angeordneten Transponder zu "identifizieren" und damit die Voraussetzung zu schaffen, dass der Weg des Kunden durch die Anlage verfolgt werden kann und jeweils beim Ankommen bei einer der Bildschirmeinheiten eine entsprechende Werbebotschaft oder dergleichen erzeugt und abgegeben werden kann.

In dem erfindungsgemäßen Kommunikationssystem kommt ein "Diskless-Boot-Konzept" zur Anwendung. Das heißt, die einzelnen Bildschirmeinheiten des Kommunikationssystems verfügen über keinerlei Festspeichermedien wie Festplatten oder Speicherkarten. Vielmehr werden die einzelnen Bildschirmeinheiten alle zentral direkt von Server aus geladen. Das hat folgende Vorteile:
- Die Betriebssysteme der einzelnen Geräte brauchen nicht individuell administriert werden, sondern es muß nur ein zentrales Image gepflegt werden.
- Die Einstellungen der einzelnen Bildschirmeinheiten sind immer identisch, da sie alle direkt von einer zentralen Stelle aus geladen werden.
- Updates können durch Änderung des zentralen Image sehr einfach für alle Geräte gleichzeitig durchgeführt werden, so dass also keine Updatevorgänge und dergleichen an jedem einzelnen der diversen Bildschirmeinheit-Geräte vorgenommen zu werden brauchen.
- Die einzelnen Bildschirmeinheit-Geräte sind weniger fehleranfällig, da sie über weniger empfindliche Komponenten verfügen.
- Die einzelnen Geräte benötigen weniger Energie.
- Die einzelnen Geräte müssen vor Inbetriebnahme nicht einzeln bespielt oder konfiguriert werden.
- Das Content-Management wird wesentlich vereinfacht, da alle Inhalte nur auf dem Server gespeichert werden.

Innerhalb des erfindungsgemäßen Kommunikationssystems stellt der Server 5 also alle benötigten Daten für die einzelnen Bildschirmeinheiten 1 zur Verfügung, die zum Betrieb der Bildschirmeinheiten benötigt werden. Die Bildschirmeinheiten selbst brauchen daher über keinerlei Festspeichermedien zu verfügen.

Nach dem Einschalten oder Zuschalten einer Bildschirmeinheit erhält diese eine durch den Server zugewiesene Netzwerkadresse, an welche der Server das Betriebssystem der Bildschirmeinheit in Form einer Image-Datei sendet. Diese Image-Datei wird vollständig in den flüchtigen Speicher (RAM-Speicher) der Bildschirmeinheit geladen, woraus das Betriebssystem gestartet wird.

Aufgrund des dargestellten Aufbaus des Kommunikationssystems kann dieses jederzeit beliebig erweitert werden, indem eine weitere Bildschirmeinheit 1 über ein Ethernetkabel 2 einfach an die nächstliegende Bildschirmeinheit, nämlich an deren Koppelglied 12, angeschlossen wird.

## Patentansprüche

1. Audio-visuelles Kommunikationssystem zum Einsatz in großflächigen kommerziellen Anlagen, das aufweist:
Eine Anzahl von über die Anlage verteilt angeordneten Informationsausgabeeinrichtungen, die jeweils zur Ausgabe von Audio- und/oder visuellen Informationen ausgebildet sind,
einer Datenverarbeitungsanlage, mit welcher jede der Informationsausgabeeinrichtungen verbunden oder verbindbar ist, und
Kundenidentifizierungsgeräte, die während des Aufenthalts in der Anlage von Kunden mitführbar sind und den jeweiligen Kunden dadurch während seines Aufenthalts mit einer zeitweiligen Identifizierung versehen,
wobei eine in dem jeweiligen Identifizierungsgerät enthaltende Identifizierungsinformation drahtlos auslesbar ist und mindestens bei einem Teil der Anzahl der Informationsausgabeeinrichtungen jeweils ein Lesegerät zum Auslesen der Identifizierungsinformation bei Annäherung eines Identifizierungsgeräts an die betreffende Informationsausgabeeinrichtung ein Lesegerät vorhanden ist,
**dadurch gekennzeichnet, dass**
jede Informationsausgabeeinrichtung ein Informationsausgabegerät, einen Prozessor, einen RAM-Speicher und ein Koppelglied aufweist,
und die Informationsausgabeeinrichtungen über ein Ethernetkabel-Netzwerk mit der Datenverarbeitungsanlage verbunden sind.

2. System nach Anspruch 1, wobei die Datenverarbeitungsanlage einen zentralen Server aufweist, der sämtliche Informationsausgabeeinrichtungen steuert und sowohl mit Daten als auch mit Programmen speist.

3. System nach Anspruch 1 oder 2, wobei das Ethernetkabel-Netzwerk von der Datenverarbeitungsanlage direkt oder über ein Verteilerkoppelglied zu mindestens einer der Informationsausgabeeinrichtungen verlaufende Ethernetkabel sowie zwischen einzelnen Informationsausgabeeinrichtungen verlaufende Ethernetkabel umfasst.

4. System nach einem der Ansprüche 1 bis 3, wobei jede Informationsausgabeeinrichtung eine Bildschirmeinheit umfasst.

5. System nach Anspruch 4, wobei jeder Bildschirmeinheit ein interner oder externer Lautsprecher zugeordnet ist.

6. System nach einem der Ansprüche 1 bis 5, wobei der Prozessor, der RAM-Speicher, und das Koppelglied in ein Gehäuse der jeweiligen Informationsausgabeeinrichtung integriert sind.

7. System nach einem der Ansprüche 1 bis 6, wobei die Identifikationsgeräte jeweils Transponder sind, die in einen Einkaufswagen, einen Einkauskorb oder einen sonstigen, vom Kunden mitzuführenden Gegenstand eingebaut sind.

8. System nach einem der Ansprüche 1 bis 7, wobei in dem oder jedem Eingangsbereich der Anlage ein Identifikationslesegerät zum Erfassen der Identifizierungsinformation von die Anlage betretenden Kunden angeordnet ist.

9. System nach Anspruch 8, wobei in dem oder jeden Kassenbereich und/oder in dem oder jedem Ausgangsbereich der Anlage ein Lesegerät zum Erfassen der Identifizierungsinformation eines den Kassenbereich passierenden oder die Anlage verlassenden Kunden angeordnet ist.
